# EUROPÄISCHE PATENTSCHRIFT

(11) **EP 4 007 822 B1**
(45) Veröffentlichungstag und Bekanntmachung des Hinweises auf die Patenterteilung: **04.09.2024**
(21) Anmeldenummer: 21751994.1
(22) Anmeldetag: 16.07.2021
(51) Int. Cl.: C21D 1/09, C21D 9/34

(54) **VERFAHREN DES LASERHÄRTENS EINER IM WESENTLICHEN ZYLINDRISCHEN OBERFLÄCHE EINES WERKSTÜCKS**
METHOD FOR LASER HARDENING A SUBSTANTIALLY CYLINDRICAL SURFACE OF A WORKPIECE
PROCÉDÉ DE DURCISSEMENT PAR LASER D'UNE SURFACE CYLINDRIQUE D'UNE PIÈCE

(30) Priorität: 23.10.2020 DE 102020127991
(43) Veröffentlichungstag der Anmeldung: 08.06.2022
(73) Patentinhaber: Fimbinger, Johann, 8401 Kalsdorf (AT)
(72) Erfinder: Fimbinger, Johann, 8401 Kalsdorf (AT)
(74) Vertreter: Grättinger Möhring von Poschinger Patentanwälte Partnerschaft mbB
(86) Internationale Anmeldenummer: PCT/EP2021/070010
(87) Internationale Veröffentlichungsnummer: WO 2022/083907

(56) Entgegenhaltungen:
- EP-A2- 0 116 359
- WO-A1-95/09736
- WO-A1-99/29520
- DD-A1- 267 740
- DE-T5- 112013 004 368
- US-A- 4 304 978

## Beschreibung

Die Erfindung betrifft ein Verfahren des Laserhärtens einer im wesentlichen zylindrischen Oberfläche eines Werkstücks, insbesondere des Radkranzes der Radscheibe eines gleisgeführten Eisenbahnrads, wenigstens mit einer Teilbreite seiner dem Abrieb ausgesetzten Lauffläche und/oder der Lauffläche zugewandten Seite seines Spurkranzes.

Gleichermaßen betrifft die Erfindung das Laserhärten bei Werkstücken mit laserhärtbaren zylindrischen Oberflächen wie beispielsweise von Eisenbahn Radsatzwellen, Zapfen von Kurbelwellen oder dergleichen.

Laufflächen von Schienenfahrzeugrädern wie Radscheiben an Eisenbahnwagons und Eisenbahnlokomotiven unterliegen in Abhängigkeit von Materialpaarung, Werkstoffzusammensetzung und Oberflächenhärte von Radscheibe und Gleis-schiene sowie von den Umgebungsbedingungen einem mehr oder weniger starken Verschleiß infolge Reibung bzw. Schlupf zwischen Rad und Schiene. Dieser Verschleiß begrenzt die Standzeit der Räder. Dementsprechend können die Laufzeiten zwischen zwei Wartungszyklen stark variieren, so dass mit deutlichen Kostenschwankungen für den Wartungsaufwand bei wiederholter Profilierung der Radscheiben bei oder kurz vor Erreichen der vorschriftsmäßigen Betriebsgrenzmaße zu rechnen ist.

Um genannten Verschleiß zu mindern wurden Eisenbahnräder mit warmgehärteten Laufflächen hergestellt, wobei üblicherweise der gesamte Spurkranz gehärtet wurde. Wegen der mit einer solchen Warmhärtung verbundenen Gefahr der Rissbildung im Bereich des Radkranzes und zur Verbesserung der Härtung wurde nach EP 0116359 vorgeschlagen, Eisenbahnräder herzustellen, bei denen die Lauffläche und oder der ihr zugewandte Teile des Spurkranzes in Umfangsrichtung abschnittweise lasergehärtet sind. Dabei können Tiefe und Ausdehnung der gelaserten Abschnitte in weiten Grenzen variiert werden. Die Laserhärtung kann dabei zusammen mit dem Drehen oder Überdrehen des Radkranzes erfolgen. Zur Steuerung des Härtungsgrades kann der Abstand zwischen der Vorrichtung zur Laserhärtung und der zu härtenden Oberfläche variiert werden.

Zum Verschleißfestmachen von Metallrädern verweist DD 267740 A1 allgemein auf den Einsatz einer Lasereinrichtung zur Oberflächenhärtung von Laufkranz und Spurkranz bei Eisenbahnrädern.

Bei der in WO99/29520 A1 beschriebenen Anwendung des Laserhärtens werden mittels des Laserstrahls in Abständen quer zur Lauffläche einer Radscheibe eines gleisgeführten Eisenbahnrads schräg zur Laufrichtung verlaufende Streifen mit einer martensitischen Kristallstruktur erzeugt. Durch die gesteigerte Härte dieser Streifen sollen Geräusche und Vibrationen des Fahrbetriebs reduziert werden.

Nach DE 10218141 A1 wird als Variante einer Laser-Wärmebehandlung von Werkstücken vorgeschlagen, das Werkstück durch mehrere jeweils separat steuerbare Laserstrahlbündel mittels Relativbewegung zwischen diesen und dem Werkstück zu beaufschlagen. Bei Verwendung von zumindest zwei derartiger Laserstrahlbündel können diese gesteuert gegeneinander bewegt werden bis sie sich in einer gemeinsamen Endlinie treffen. Bei Erreichen der gemeinsamen Endlinie kann durch Vermeidung einer Überschneidung der Härtebahnen die Intensität der beiden aufeinandertreffenden Laserstrahlenbündel verringert werden. Damit soll der Gefahr einer lokal unerwünschten Wärmeeinbringung auf Anlasstemperatur vorgebeugt werden.

Aus DE 112013004368 T5 ist schließlich ein Verfahren zum Laserhärten einer Oberfläche eines Zapfens einer Kurbelwelle bekannt, wobei ein zu härtender Oberflächenbereich wenigstens einen wärmeempfindlicheren Teilbereich und einen weniger wärmeempfindlichen Teilbereich umfasst. Nach diesem Verfahren wird der Laserstrahl derart abgetastet, dass beide Oberflächenbereiche durch unterschiedliche Modulierung des Laserstrahls unterschiedlich stark erwärmt werden. An ein Ölschmierungsloch angrenzende Bereiche der Kurbelwelle werden hierbei einer geringeren Wärmeeintragung ausgesetzt als andere Oberflächenbereiche der Kurbelwelle.

Demgegenüber liegt der vorliegenden Erfindung die Aufgabe zugrunde, eine durch Laserhärten erzeugte Oberfläche von Radkränzen an Eisenbahnrädern zu verwirklichen, die selbst unter schwierigen Umgebungsbedingungen den Verschleiß zwischen Radscheibe und Gleisbahn verringert und damit längere Laufzeiten zwischen zwei Wartungszyklen ermöglicht. Eine besondere Zielsetzung besteht dabei darin, dass alle dem Abrieb ausgesetzten Oberflächenbereiche sowohl auf Seiten des Spurkranzes als auch der daran anschließenden Radlauffläche gleichmäßig bearbeitet werden können, sodass insbesondere eine über den genannten Radscheibenumfang unterschiedliche verschleißbedingte Abnutzung vermeidbar ist.

Insbesondere sollen dabei schädliche Einflussgrößen wie störende Microschwingungen zwischen Radscheibe und Gleisbahn, die im Fahrbetrieb Unrundheiten der Radscheibe verursachen können, durch geeignete Modulierung des Laserstrahls mit Schaffung eines gleichmäßigen Härte-Tiefen-Verlaufs der Laserhärtebahn vermieden werden.

Ausgehend von dem eingangs genannten Stand der Technik umfasst das erfindungsgemäße Verfahren die Verfahrensschritte gemäß Patentanspruch 1 mit weiteren Ausgestaltungen gemäß den Verfahrensansprüchen 2 bis 8.

Dabei sind zusätzliche Einflussgrößen zu beachten wie die Zusammensetzung des Radscheibenwerkstoffs nach DIN EN 13262, Oberflächenzustand wie Rauigkeit, Oxydationsgrad, Homogenität des Radscheibenwerkstoffes, Umgebungstemperatur usw.

Durch das erfindungsgemäße Merkmal, dass der Laserspot ein Abtastmuster in Art einer schmalen Zeilenform quer zu der zu bearbeitenden Oberfläche, entsprechend der Rotation der Radscheibe, beschreibt und sich über deren gesamte Breite erstreckt kann mit besonders kurzen Laserprozesszeiten eine vergütete Oberflächenschicht mit gegenüber der restlichen Radscheibe höherer Härte geschaffen werden, wobei durch die oberflächliche Wärmeeinbringung ein ausgeprägter Temperaturgradient in die Tiefe des Radkranzes erzielbar ist.

Durch das ergänzende erfindungsgemäße Merkmal, dass die Zeilenform des Abtastmusters mit ihrer Längsachse schräg zur Rotationsachse der Radscheibe verläuft gelingt es, vertikale Microschwingungen, die zu stärkeren Schwingungen innerhalb der Kontaktkontur zwischen Radscheibe und Gleis führen können, weitgehend zu vermeiden. Durch die Schräge des Laserspots wird vielmehr ein gleichmäßiger Härteaufbau und eine homogene Härteverteilung innerhalb der Laserbahn erzielt und somit eine weitgehend verschleißfreie Oberfläche von Lauffläche und/oder Spurkranz geschaffen.

Bei Vermeidung der genannten Microschwingungen, die zu Unrundheiten der Radscheibe und damit zu Störungen im Rad-Schienenkontakt führen können, gelingt es, die Standzeit einer Radscheibe zwischen aufeinanderfolgenden Wartungsterminen deutlich auszudehnen mit der Folge erheblicher Kosteneinsparungen.

Durch die erfindungsgemäß angrenzende Überlappungszone jeweils zu Beginn und nach dem Ende einer vollen Radumdrehung der Radscheibe mit reduzierter Leistung der Laserquelle gelingt es, die dem Abrieb ausgesetzte Laserbehandelte Oberfläche der Radscheibe in den Übergangsbereichen jeder Überlappungszone besonders gleichmäßig auszubilden.

Vorteilhaft verläuft die Längsachse der Laserspot bildenden Zeilenform bezüglich einer zur Rotationsachse der Radscheibe senkrechten Ebene innerhalb eines Winkelbereichs α zwischen 30 und 60 Winkelgraden, derart, dass der Laserspot entsprechend schräg an den gegenüberliegenden Rändern der zu bearbeitenden Oberfläche endet.

In weiterer Ausgestaltung der Erfindung ist es zur Vermeidung randnaher Ungleichmäßigkeiten der Härteverteilung vorteilhaft, dass das Abtastmuster des Laserspots randseitig jeweils mit einer Rundung endet.

Als vorteilhafte Ausgestaltung der Erfindung ist vorgesehen, dass der Laserspot innerhalb der Überlappungszone mit zum Beginn einer Umdrehung zunehmender, an deren Ende mit abnehmender Leistung moduliert wird, wodurch in den Übergangsbereichen unerwünschte schädliche Schwingungen im Fahrbetrieb vermieden werden.

Bei einer Ausgestaltung mit wenigstens zwei vollen Umdrehungen der Radscheibe, eine erste zum Laserhärten, die zweite zum Laseranlassen gelingt es die für übliche Radscheibenwerkstoffe gewünschten Randhärten und deren Härtetiefen uneingeschränkt zu verwirklichen.

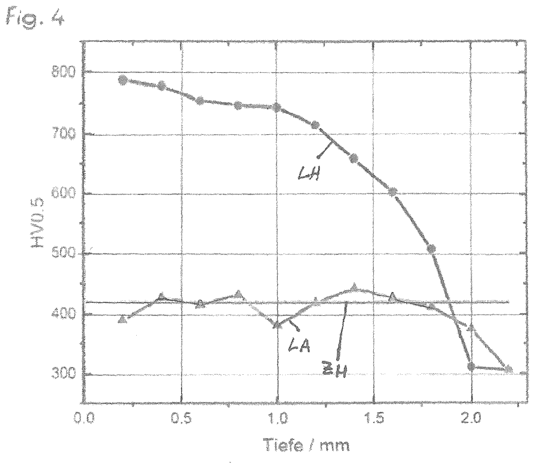

Ferner ist gemäß einer weiteren Ausgestaltung der Erfindung vorgesehen, dass die erste volle Umdrehung zum Laserhärten mit einer zum Erzeugen einer Randhärte > 600 HV geeigneten Lasermodulation erfolgt, auf welche zum Laseranlassen eine zweite volle Umdrehung zuzüglich Überlappungszone mit einer zum Erzeugen einer Randhärte zwischen 380 und 430 HV geeigneten Lasermodulation erfolgt (siehe Diagramm gemäß Fig. 4).

Zum Erreichen langer Standzeiten ist in weiterer Ausgestaltung der Erfindung vorgesehen, dass zum Laseranlassen die Lasermodulation zum Erzeugen einer maximalen Härtetiefe zwischen 0,5 und 2,0 mm geeignet gesteuert wird (siehe Diagramm gemäß Fig. 4).

Vorteilhaft ist nach einem weiteren erfindungsgemäßen Vorschlag eine mechanische Vorbehandlung der zu bearbeitenden Oberfläche vorgesehen, derart dass vor der ersten Umdrehung der Radscheibe zur Laserhärtung und/oder nach jeder weiteren Umdrehung der Radscheibe zum Laseranlassen eine auf dem Radkranz vorhandene Oxidschicht mechanisch entfernt wird. Andernfalls besteht die Gefahr der Bildung lokaler Temperaturpeaks, die zu einem automatischen Abregeln der Laserleistung und zu Weichfleckigkeit (beim Härten) bzw. Hartfleckigkeit (beim Anlassen) führen können.

Im Folgenden wird die Erfindung beispielhaft anhand der Zeichnung erläutert. Deren Figuren zeigen
- Fig. 1 einen Teil-Querschnitt durch das Profil der Radscheibe eines Eisenbahnrads
- Fig. 2 eine schematische Darstellung eines Laserspots auf einer zu bearbeitenden Lauffläche der Radscheibe
- Fig. 3 eine Rad-Schienen-Kontaktdarstellung mit Hertz'scher Kontaktfläche und
- Fig. 4 ein Diagramm eines Härte-Tiefen-Verlaufs einer Laserspur nach dem Laserhärten und dem Laseranlassen.

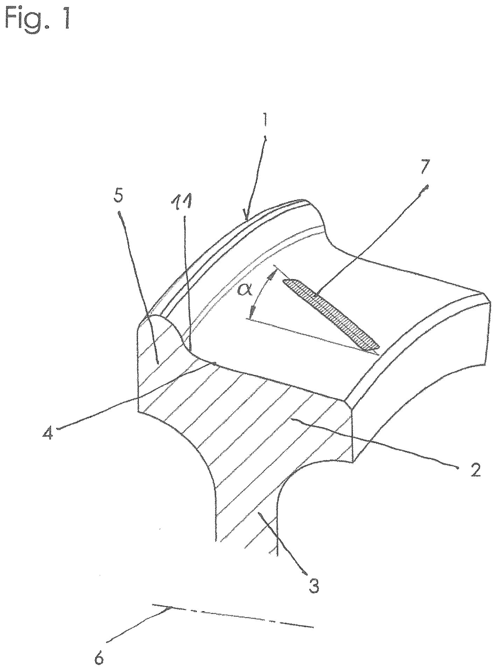

Figur 1 zeigt einen Teilquerschnitt einer Radscheibe 1 eines Eisenbahnrads durch dessen Drehachse. Der Teilschnitt verläuft durch den Radkranz 2 der Radscheibe 1. Der zur Nabe verlaufende Steg 3 der Radscheibe 1 ist verkürzt im Bereich seines Übergangs an den Radkranz 2 dargestellt. Am Außenumfang des Radkranzes 2 verläuft die Lauffläche 4 der Radscheibe 1, welche in radialer Richtung über eine Rundung 11 auf die Seitenführungsfläche des Spurkranzes 5 übergeht. In maßstäblich verkürzter Entfernung ist die Rotationsachse 6 der Radscheibe 1 des Eisenbahnrads bzw. des entsprechenden Radsatzes gezeichnet.

Auf der Lauffläche 4 ist um einen Winkel ∝ gegenüber einer axialen Schnittfläche schräg verlaufend der Laserspot 7 als schmale an den gegenüberliegenden Enden gerundete Zeilenform dargestellt. Das bedeutet, dass bei umlaufender Radscheibe 1 der Laserspot 7 mit seiner Längsachse entsprechend schräg unter dem Winkel ∝ zur Rotationsachse 6 ausgerichtet ist und diese Ausrichtung während der Rotation der Radscheibe 1 beibehält.

Je nach Anforderung an die Härte der zu bearbeitenden Oberfläche kann der Prozess des Laserhärtens bei Eisenbahnlaufflächen auf Seiten der Radscheibe unterschiedlich sein.

Einerseits besteht die Möglichkeit des reinen Laserhärtens zum Erzielen besonders hoher Härtegrade; andererseits kommen - bevorzugt für Europäische Einsätze - Kombinationen des eigentlichen Härteprozesses mit einem nachfolgenden Prozess des Laseranlassens in Frage, wobei die Prozessparameter durchaus unterschiedlich sind.

Während die Härtetemperatur auf der zu bearbeitenden Oberfläche bei ca. 1150 Grad Celsius beträgt, liegt die Anlasstemperatur mit ca. 530 Grad Celsius deutlich niedriger.

Während beim Laserhärten die Vorschubgeschwindigkeit entsprechend der Radscheibenrotation ca. 100 mm / min beträgt, liegt sie beim Anlassprozess deutlich darunter, nämlich bei ca. 70 mm / min.

Auch bei der Laserleistung divergieren die Werte für den Prozessstart, nämlich für den Härteprozess bei ca. 6 kW, beim Anlassprozess bei ca. 5 kW. Durch entsprechende Regeleingriffe ergeben sich also während dieser Prozessabläufe stark unterschiedliche Werte.

Wie oben erwähnt, kommen für das anmeldungsgemäße Verfahren des Laserhärtens für die beiden Prozessvarianten Laserhärten und/oder Laseranlassen unterschiedliche Anforderungen an die Oberfläche der Laserspur in Betracht.

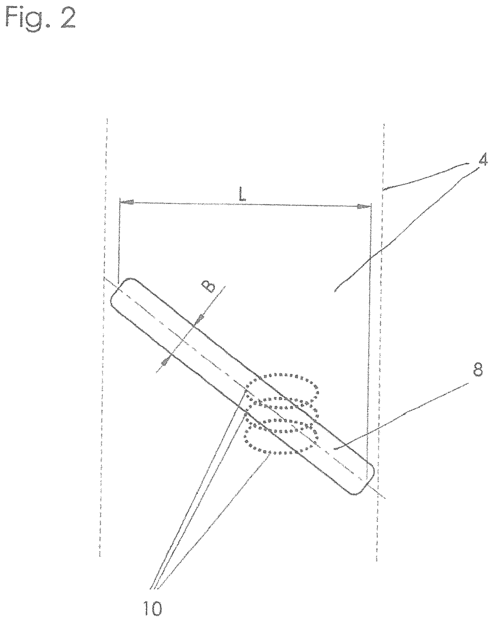

Durch die vorstehend beschriebene Schräglage des Laserspots 7 gelingt es, wie in Figur 2 gezeigt, auf die Anfangs- und Endphase einer Laserspur für aufeinanderfolgende Prozessphasen Einfluss zu nehmen, dergestalt, dass ein möglichst stoßfreier Übergang am Anfang und am Ende jeder vollen Umdrehung der Radscheibe 1 unter der Wirkung des Laserspots gewährleistet ist.

Durch die Schräglage des Laserspots 7 kann zudem am Anfang und am Ende jeder vollen Umdrehung der behandelten Radscheibe 1 eine Überlappungszone 8 mit angepasster, z.B. geringerer Oberflächenhärte genutzt werden, die im Gleis-Schienen-Kontakt ein glattes Abrollen ermöglicht. Ursächlich ist hierfür die weitgehende Vermeidung von Microschwingungen in der laserbehandelten Oberfläche. Derartige Microschwingungen erzeugen sonst zunehmende Unrundheiten als Folge einer Vertikaldynamik innerhalb des Gleis-Schiene-Kontakts.

Der Einfluss einer Überlappungszone wird durch den Prozess des Laseranlassens begünstigt, weil die hierdurch geringere Härte der Lauffläche im Gleis-Schiene-Kontakt ein gedämpftes Abrollen ermöglicht.

Die Darstellung einer Überlappungszone 8 gemäß Figur 2 entspricht etwa dem Maßstab 1:1 bei einer Breite der Lauffläche 4 von etwa 60 mm. Eine solche Überlappungszone 8 mit der Breite B und der Länge L ist jeweils vor dem Anfang der Laserbahn und nach deren Ende vorgesehen. Die Zeichnung zeigt in drei Phasen die elliptische Kontur 10 des Hertz'schen-Rad-Schiene-Kontakts zur feinstufigen Überbrückung im Bereich der Überlappungszonen der Laserbahn, wodurch die schädlichen Schwingungen, welche bei den bekannten zur Laufbahn querverlaufenden Laserspots verstärkt auftreten, weitgehend vermieden werden.

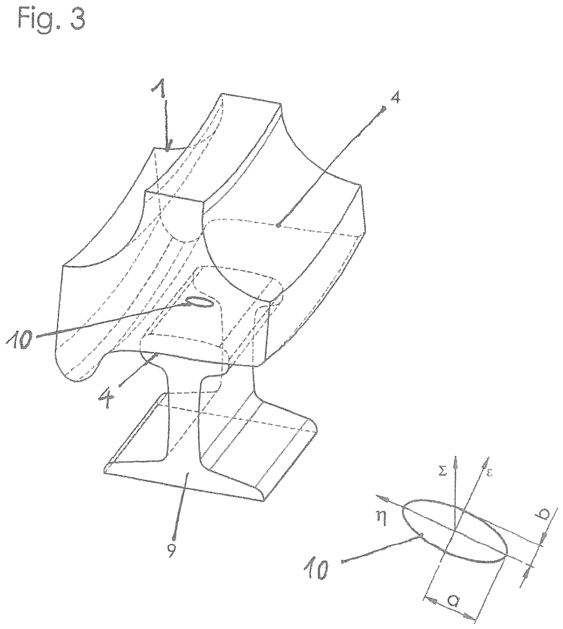

Bezüglich der Hertz'schen Kontaktfläche sei auf die Figur 3 verwiesen, welche in schematischer Darstellung den Teilumfang einer Lauffläche 4 einer Radscheibe 1 auf einem Schienenabschnitt 9 eines Eisenbahngleises zeigt. Die auf der Gleisbahn gezeichnete Hertz'sche Kontaktfläche 10 entspricht dem Rad-Schienen-Kontakt, d.h. im Kontaktpunkt fallen die Achsen (η, ε, Σ) der Kontaktsysteme von Rad und Schiene zusammen unter Bildung der in Figur 3 gesondert dargestellten ellipsenförmigen Hertz'schen Kontaktfläche 10 mit den Halbachsen a und b, wobei die kürzere Halbachse b in Fahrtrichtung ausgerichtet ist.

Im Folgenden werden aus Vorversuchen gewonnene Ergebnisse erläutert, welche das anmeldegemäße Verfahren betreffen. Dabei werden die Ergebnisse des Laserhärtens bei der Erzeugung einer umlaufenden Härtebahn eines Eisenbahnrads wahlweise durch den Prozess des reinen Laserhärtens in einer ersten Radumdrehung bzw. des Laserhärtens in einer ersten Radumdrehung und des nachfolgenden Laseranlassens in einer weiteren Radumdrehung behandelt. Wesentlich ist dabei die Modulierung des Laserstrahls hinsichtlich seiner Leistung und/oder seiner Abtastgeschwindigkeit und/oder seiner Laserspotgröße und/oder seines Abtastmusters und/oder der Laserprozesszeit.

Die Laufflächen von Radscheiben an Eisenbahnlokomotiven und -wagen unterliegen unterschiedlich starken Verschleißerscheinungen in Abhängigkeit von der Oberflächenhärte an Radscheibe und Schiene sowie von vorherrschenden Umgebungsbedingungen. Beispielsweise im arabischen Raum stellt die Einwirkung von Sand als abrasives Medium bei überdies hohen Temperaturen eine extreme Herausforderung bezüglich des Materialverschleißes dar, so dass dort die Laufzeiten zwischen zwei Wartungszyklen der Radscheiben an Eisenbahnradsätzen entsprechend kurz sind und zu hohen Betriebskosten führen.

Es wurden Versuchsreihen mit ein- oder zwei-stufiger Laserwärmebehandlung durchgeführt mit dem Ziel eine Randhärte, d.h. eine maximale Härte in einer Härtetiefe zwischen 0,5 und 2,0 mm zu erzielen, wobei eine Härtebahnbreite von ca. 60 mm vorgegeben war.

Ferner wurde ein schmaler zeilenförmiger Laserspot gewählt, etwa in Form eines schlanken Streifenprofils im Verhältnis von dessen Länge zu dessen Breite zwischen 50 und 30 vorzugsweise von ca. 40.

Für die folgende Beschreibung der Ergebnisse wurde eine Laserwärmebehandlung in zwei Prozessphasen durchgeführt, umfassend einen ersten Radumlauf nach dem Prozess der Laserhärtung und/oder einen anschließenden weiteren Radumlauf nach dem Prozess des Laseranlassens. Dabei wurde eine Oxydschicht aus dem ersten Laserprozess mechanisch entfernt, um eine stabile Prozessführung beim Laseranlassen zu gewährleisten.

Außerdem wurde entsprechend vorliegender Erfindung in beiden Prozessphasen mit einer schrägen Ausrichtung des Laserspots bzgl. der Rotationsachse gearbeitet und es kam überdies eine Überlappungszone mit reduzierter Laserleistung zu Beginn und am Ende jeder vollen Umdrehung bei beiden Laserprozesse zur Anwendung.

Hardwaremäßig wurden die Vorversuche mit einem 6 kW-Hochleistungsdiodenlaser mit einem Lichtleitfaserdurchmesser von 1500 µm durchgeführt, wobei eine Standardfokussierungsoptik mit Fokusdurchmesser 15 mm zum Einsatz kam.

Eine geeignete Scanneroptik - bekannt unter der Marke LASSY - diente zur Einstellung eines gleichmäßigen Temperaturfeldes und zur Steuerung der Laserfokusbreite.

Geeignete Wärmebildkameras dienten als Prozessregler, nämlich
für den Härteprozess: Standard-E-MAQS mit Regelsoftware LompocPro sowie
für den Anlassprozess: gleicher Standard, jedoch für Niedrigtemperaturbereich.

Das Ergebnis ist in dem Diagramm nach Figur 4 dargestellt, dessen Abszisse die Tiefe in mm und dessen Ordinate die Härte-Tiefe in der Einheit HV0,5 aufzeigt. In diesem Diagramm bedeutet die obere Kurve LH den Verlauf bei Maximalhärtung für den Laser-Härteprozess und die untere Kurve LA für den Anlassprozess. Dessen Zielhärte ist durch die Gerade ZH bei 420 HV0,5 angegeben.

Die Anlasskurve LA beschreibt das Erreichen der Zielvorgabe ZH.

Es wird durch die zweistufige oberflächliche Wärmeeinbringung ein ausgeprägter Temperaturgradient in die Tiefe verwirklicht. In beiden Härtestufen (vgl. Kurven LH und LA) kam je Umdrehung eine kurze Laserprozesszeit von nur neun Sekunden - ohne Vor- und Nachlaufzeit innerhalb der Überlappungszonen - zur Anwendung.

Aus den in Fig. 4 dargestellten Härte-Tiefen-Verläufen ist ein ausgeprägter Temperaturgradient in die Tiefe ableitbar, der maßgeblich beeinflusst ist durch die oberflächliche Wärmeeinbringung vermittels des schmalen zeilenförmigen Laserspots, die kurze Laserprozesszeit von ca. 9 Sekunden sowie die Homogenität des Werkstoffgefüges des Radkranzes.

Was die Anlassparameter betrifft so hat sich herausgestellt, dass dabei eine sehr präzise Abstimmung im Bezug auf die optimale Anlasstemperatur und die Einwirkzeit zu beachten ist, um den dargestellten gleichmäßigen Härte-Tiefen-Verlauf gemäß Anlasskurve LA zu erzielen. Insbesondere hat sich gezeigt, dass bereits geringe Temperaturabweichungen von 10 bis 20 Grad Kelvin zu deutlich messbaren Effekten führen, welche zu Abweichungen von einer gleichmäßigen Verteilung innerhalb der Härtezone führen können, d.h. es ist eine präzise Strahlformung im Rahmen der Laserspotmodulation zu beachten.

## Patentansprüche

1. Verfahren des Laserhärtens einer im wesentlichen zylindrischen Oberfläche eines Werkstücks, insbesondere des Radkranzes (2) der Radscheibe (1) eines gleisgeführten Eisenbahnrads, wenigstens mit einer Teilbreite seiner dem Abrieb ausgesetzten Lauffläche (4) und/oder der Lauffläche (4) zugewandten Seite seines Spurkranzes (5, umfassend die Verfahrensschritte:
- Projizieren eines Laserspots (7) auf die zu bearbeitende Oberfläche der Radscheibe (1) mittels einer Laserquelle,
- Erzeugen einer Relativbewegung zwischen der Oberfläche und der Laserquelle durch Rotieren der Radscheibe (1) um deren Drehachse,
- während der Drehbewegung Abtasten des Laserstrahls bezüglich der zu bearbeitenden Oberfläche,
- Modulieren des Laserstrahls nach verschiedenen Kriterien, wie hinsichtlich seiner Leistung und/oder seiner Abtastgeschwindigkeit und/oder seiner Laserspotgröße und/oder seinem Abtastmuster,
- wobei der Laserspot (7) ein Abtastmuster in Art einer schmalen Zeilenform quer zu der zu bearbeitenden Oberfläche, entsprechend der Rotation der Radscheibe (1), beschreibt und sich über deren gesamte Breite erstreckt, wobei die Zeilenform des Abtastmusters mit ihrer Längsachse schräg zur Rotationsachse (6) der Radscheibe (1) verläuft und
wobei die Laserquelle nach wenigstens einer ersten vollen Umdrehung der Radscheibe (1) innerhalb einer an den Beginn und/oder an das Ende der bearbeiteten Oberfläche angrenzenden Überlappungszone (8) mit reduzierter Leistung betrieben wird.

2. Verfahren nach Anspruch 1, **dadurch gekennzeichnet,**
**dass** die Längsachse der den Laserspot (7) bildenden Zeilenform bezüglich einer zur Rotationsachse (6) der Radscheibe (1) senkrechten Ebene einen Winkel ∝ zwischen 30 und 60 Grad bildet, derart, dass der Laserspot (7) entsprechend schräg an den gegenüberliegenden Rändern der zu bearbeitenden Oberfläche endet.

3. Verfahren nach Anspruch 2, **dadurch gekennzeichnet,**
**dass** das Abtastmuster des Laserspots (7) randseitig jeweils mit einer Rundung endet.

4. Verfahren nach Anspruch 1, **dadurch gekennzeichnet,**
**dass** der Laserspot (7) innerhalb der Überlappungszone (8) mit zu Beginn einer Umdrehung zunehmender, an deren Ende mit abnehmender Leistung moduliert wird.

5. Verfahren des Laserhärtens nach Anspruch 1, **dadurch gekennzeichnet,**
**dass** wenigstens zwei volle Umdrehungen der Radscheibe (1), eine erste zum Laserhärten, die zweite zum Laseranlassen durchgeführt werden.

6. Verfahren des Laserhärtens nach Anspruch 5, **dadurch gekennzeichnet,**
**dass** die erste volle Umdrehung zum Laserhärten mit einer zum Erzeugen einer Randhärte > 600 HV geeigneten Lasermodulation erfolgt, auf welche zum Laseranlassen eine zweite volle Umdrehung mit einer zum Erzeugen einer Randhärte zwischen 380 und 430 HV geeigneten Lasermodulation folgt.

7. Verfahren des Laserhärtens nach Anspruch 6, **dadurch gekennzeichnet,**
**dass** zum Laseranlassen die Lasermodulation zur Erzeugung einer maximalen Härtetiefe zwischen 0,5 und 2,0 mm geeignet gesteuert wird.

8. Verfahren des Laserhärtens nach Anspruch 5, **dadurch gekennzeichnet,**
**dass** vor der ersten und/oder nach jeder weiteren Umdrehung der Radscheibe (1) eine auf dem Radkranz (2) vorhandene oder nach einer vorherigen Laserbehandlung gebildete Oxidschicht mechanisch entfernt wird.

## Claims

1. A method for laser hardening an essentially cylindrical surface of a workpiece, in particular of the wheel rim (2) of the wheel disk (1) of a track guided railroad wheel, at least with a partial width of its running surface (4) subjected to wear and/or the side of its wheel flange (5) facing the running surface (4), comprising the following procedural steps:
- Projecting a laser spot (7) onto the surface of the wheel disk (1) to be machined by means of a laser source,
- Generating a relative motion between the surface and the laser source by rotating the wheel disk (1) around its axis of rotation,
- Scanning the laser beam in relation to the surface to be machined during the rotational motion,
- Modulating the laser beam according to various criteria, such as with regard to its power and/or its scanning speed and/or its laser spot size and/or its scanning pattern,
- wherein the laser spot (7) describes a scanning pattern in the form of narrow lines transverse to the surface to be machined, corresponding to the rotation of the wheel disk (1), and extends over its entire width, wherein the line form of the scanning pattern runs with its longitudinal axis inclined to the axis of rotation (6) of the wheel disk (1), and
wherein the laser source is operated at a reduced power after at least one first complete revolution of the wheel disk (1) within an overlapping zone (8) that adjoins the beginning and/or end of the surface to be machined.

2. The method according to claim 1, **characterized in that** the longitudinal axis of the line form comprising the laser spot (7) forms an angle α of between 30 and 60 degrees in relation to a plane perpendicular to the axis of rotation (6) of the wheel disk (1), such that the laser spot (7) ends correspondingly inclined at the opposing edges of the surface to be machined.

3. The method according to claim 2, **characterized in that** the scanning pattern of the laser spot (7) ends with a respective rounded area on the edge.

4. The method according to claim 1, **characterized in that** the laser spot (7) within the overlapping zone (8) is modulated with an increasing power at the beginning of a revolution, and with a decreasing power at its end.

5. The laser hardening method according to claim 1, **characterized in that** at least two complete revolutions of the wheel disk (1) are executed, a first one for laser hardening, the second for laser activation.

6. The laser hardening method according to claim 5, **characterized in that** the first complete revolution for laser hardening takes place with a laser modulation suitable for generating an edge hardness > 600 HV, which is followed by a second complete revolution for laser activation with a laser modulation suitable for generating an edge hardness of between 380 and 430 HV.

7. The laser hardening method according to claim 6, **characterized in that** the laser modulation for laser activation is suitably controlled to generate a maximum hardness depth of between 0.5 and 2.0 mm.

8. The laser hardening method according to claim 5, **characterized in that** an oxide layer that is present on the wheel rim (2) or forms after a preceding laser treatment is mechanically removed before the first and/or after each additional revolution of the wheel disk (1).

## Revendications

1. Procédé de durcissement par laser d'une surface sensiblement cylindrique d'une pièce, en particulier de la jante (2) du disque de roue (1) d'une roue ferroviaire guidée sur rail, avec une largeur partielle de sa surface de roulement (4) exposée à l'usure et/ou la face tournée vers la surface de roulement (4) de son boudin de roue (5), comprenant les étapes de procédé suivantes :
- projection d'un point laser (7) sur la surface à traiter du disque de roue (1) au moyen d'une source de laser,
- génération d'un mouvement relatif entre la surface et la source de laser par rotation du disque de roue (1) autour de son axe de rotation,
- pendant le mouvement de rotation, balayage du rayon laser au niveau de la surface à traiter,
- modulation du rayon laser d'après différents critères, comme concernant sa puissance et/ou sa vitesse de balayage et/ou sa taille de point laser et/ou son motif de balayage,
- le point laser (7) décrivant un motif de balayage à la manière d'une forme de ligne étroite transversalement à la surface à traiter en fonction de la rotation du disque de roue (1) et s'étendant sur toute sa largeur, la forme de ligne du motif de balayage s'étendant par son axe longitudinal obliquement par rapport à l'axe de rotation (6) du disque de roue (1) et
la source de laser, après au moins une première rotation complète du disque de roue (1), étant utilisée, dans une zone de chevauchement (8) jouxtant le début et/ou la fin de la surface à traiter, avec une puissance réduite.

2. Procédé selon la revendication 1, **caractérisé en ce que** l'axe longitudinal de la forme de ligne constituant le point laser (7) par rapport à un plan perpendiculaire à l'axe de rotation (6) du disque de roue (1) forme un angle α de 30 à 60 degrés, de sorte que le point laser (7) se termine en conséquence obliquement aux bords opposés de la surface à traiter.

3. Procédé selon la revendication 2, **caractérisé en ce que** le motif de balayage du point laser (7) se termine respectivement au bord par un arrondi.

4. Procédé selon la revendication 1, **caractérisé en ce que** le point laser (7) est modulé dans la zone de chevauchement (8) par une puissance augmentant au début d'une rotation, par une rotation décroissante à sa fin.

5. Procédé selon la revendication 1, **caractérisé en ce qu'**au moins deux rotations complètes du disque de roue (1), une première pour le durcissement au laser, la seconde pour trempe au laser, sont effectuées.

6. Procédé selon la revendication 5, **caractérisé en ce que** la première rotation complète pour le durcissement ou laser a lieu avec une modulation de laser appropriée pour créer une dureté de bord > 600 HV, laquelle rotation est suivie, pour trempe au laser, par une seconde rotation complète avec une modulation de laser appropriée pour créer une dureté de bord de 380 à 430 HV.

7. Procédé selon la revendication 6, **caractérisé en ce que**, pour trempe au laser, la modulation de laser est contrôlée de manière appropriée pour créer une profondeur de dureté maximale de 0,5 à 2,0 mm.

8. Procédé selon la revendication 5, **caractérisé en ce que**, avant la première et/ou après chaque autre rotation du disque de roue (1), une couche oxydée présente sur la jante (2) ou formée après un traitement au laser préalable est éliminée mécaniquement.
